# EUROPEAN PATENT APPLICATION

(11) **EP 4 167 657 A1**
(43) Date of publication of application: **19.04.2023**
(21) Application number: 21846584.7
(22) Date of filing: 19.07.2021
(51) Int. Cl.: H04W 56/00

(54) **SYNCHRONIZATION SIGNAL AND PBCH BLOCK SEARCH INFORMATION DETERMINATION METHOD AND APPARATUS, AND COMMUNICATION DEVICE**

(30) Priority: 20.07.2020 CN 202010700401
(71) Applicant: Vivo Mobile Communication Co., Ltd., Dongguan, Guangdong 523863 (CN)
(72) Inventor: LI, Gen, Dongguan, Guangdong 523863 (CN); WU, Kai, Dongguan, Guangdong 523863 (CN); HONG, Qi, Dongguan, Guangdong 523863 (CN)
(74) Representative: Carangelo, Pierluigi
(86) International application number: PCT/CN2021/107046
(87) International publication number: WO 2022/017310

(57) **Abstract**

A method and apparatus for determining SSB search information and a communications device are disclosed. The method for determining SSB search information, when applied to a terminal, includes: obtaining target information, where the target information includes at least one of frequency domain information of SSB and indication signaling; and determining related information of SSB search based on the target information.

## Description

### CROSS-REFERENCE TO RELATED APPLICATION

This application claims priority to Chinese Patent Application No. 202010700401.3, filed on July 20, 2020 in China, which is incorporated herein by reference in its entirety.

### TECHNICAL FIELD

This application pertains to the field of communications technologies, and specifically relates to a method and an apparatus for determining SSB search information, and a communications device.

### BACKGROUND

During communication between a terminal and a network-side device, a downlink synchronization channel transmitted by the network-side device and received by the terminal includes a primary synchronization signal (Primary Synchronization Signal, PSS) and a secondary synchronization signal (Secondary Synchronization Signal, SSS). The PSS, SSS, and a physical broadcast channel (Physical broadcast channel, PBCH) form a synchronization signal and PBCH block (Synchronization Signal and PBCH block, SSB).

At present, when a communication system operates on a high band, an initial frequency offset increases due to an increase of signal frequency, which makes the SSB frequency offset estimation algorithm more complex, causing the terminal to spend more time in searching for the SSB.

### SUMMARY

An objective of embodiments of this application is to provide a method and an apparatus for determining SSB search information and a communications device, so as to resolve a problem in the related art that a terminal needs to spend much time in searching for an SSB.

To resolve the foregoing technical problem, this application is implemented as follows.

According to a first aspect, a method for determining SSB search information is provided, applied to a terminal, where the method includes:
obtaining target information, where the target information includes at least one of frequency domain information of SSB and indication signaling; and
determining related information of SSB search based on the target information.

According to a second aspect, a method for determining SSB search information is provided, applied to a network-side device, where the method includes:
sending indication signaling to a terminal, the indication signaling being used to indicate the terminal to determine related information of SSB search.

According to a third aspect, an apparatus for determining SSB search information is provided, applied to a terminal, where the apparatus includes:
an obtaining module, configured to obtain target information, where the target information includes at least one of frequency domain information of SSB and indication signaling; and
a determining module, configured to determine related information of SSB search based on the target information.

According to a fourth aspect, an apparatus for determining SSB search information is provided, applied to a network-side device, where the apparatus includes:
a sending module, configured to send indication signaling to a terminal, the indication signaling being used to indicate the terminal to determine related information of SSB search.

According to a fifth aspect, a communications device is provided, including a processor, a memory, and a program or instructions stored in the memory and executable on the processor, where when the program or instructions are executed by the processor, the steps of the method for determining SSB search information according to the first aspect are implemented, or when the program or instructions are executed by the processor, the steps of the method for determining SSB search information according to the second aspect are implemented.

According to a sixth aspect, a readable storage medium is provided, where the readable storage medium stores a program or instructions, and when the program or instructions are executed by a processor, the steps of the method for determining SSB search information according to the first aspect are implemented, or the steps of the method for determining SSB search information according to the second aspect are implemented.

According to a seventh aspect, a program product is provided, where the program product is stored in a non-volatile storage medium, and the program product is configured to be executed by at least one processor to implement the method for determining SSB search information according to the first aspect or the method for determining SSB search information according to the second aspect.

According to an eighth aspect, a chip is provided, where the chip includes a processor and a communications interface, the communications interface is coupled to the processor, and the processor is configured to run a communications device program or instructions to implement the method according to the first aspect, or to implement the method according to the second aspect.

In the embodiments of this application, the terminal obtains at least one of frequency domain information of SSB and indication signaling, and then determines the related information of SSB search. In this way, the terminal reduces the complexity of the SSB search, improving the speed of the SSB search performed by the terminal and reducing the search time spent by the terminal.

### BRIEF DESCRIPTION OF DRAWINGS

FIG. 1 is a block diagram of a wireless communications system to which an embodiment of this application may be applied;
FIG. 2 is a flowchart of a method for determining SSB search information according to an embodiment of this application;
FIG. 3 is a flowchart of another method for determining SSB search information according to an embodiment of this application;
FIG. 4 is a structural diagram of an apparatus for determining SSB search information according to an embodiment of this application;
FIG. 5 is a structural diagram of another apparatus for determining SSB search information according to an embodiment of this application;
FIG. 6 is a structural diagram of a communications device according to an embodiment of this application;
FIG. 7 is a structural diagram of a terminal according to an embodiment of this application; and
FIG. 8 is a structural diagram of a network-side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates an "or" relationship between the associated objects.

It should be noted that the technologies described in the embodiments of this application are not limited to long term evolution (Long Term Evolution, LTE)/LTE-Advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably. The technology described may be used in the above-mentioned systems and radio technologies as well as other systems and radio technologies. However, in the following descriptions, a new radio (New Radio, NR) system is described for an illustration purpose, and NR terms are used in most of the following descriptions, although these technologies may also be applied to other applications than an NR system application, such as a sixth generation (6^{th} Generation, 6G) communications system.

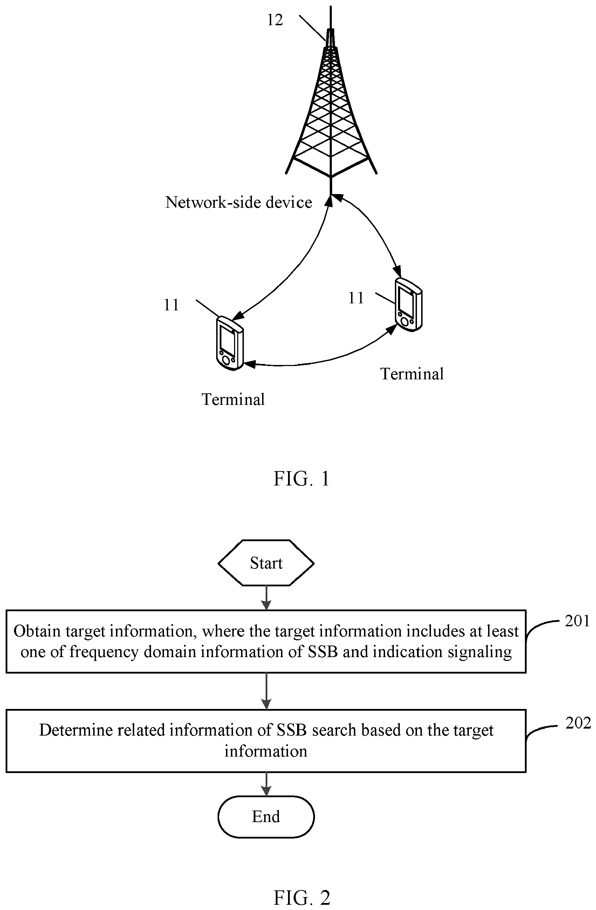

FIG. 1 is a block diagram of a wireless communications system to which an embodiment of this application may be applied. The wireless communications system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) also referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or an in-vehicle device (VUE), or a pedestrian user equipment (PUE). The wearable device includes a wristband, a headset, glasses, and the like. It should be noted that a specific type of the terminal 11 is not limited in the embodiments of this application. The network-side device 12 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a B Node, an evolved B node (eNB), a home NodeB, a home evolved NodeB, a WLAN access point, a Wi-Fi node, a transmitting receiving point (Transmitting Receiving Point, TRP), or another appropriate term in the art. As long as the same technical effects are achieved, the base station is not limited to a specific technical term. It should be noted that the base station in the NR system is taken only as an example in the embodiments of this application, but a specific type of the base station is not limited.

The following describes in detail the method for determining SSB search information that is provided in the embodiments of this application through specific embodiments and application scenarios thereof with reference to the accompanying drawings.

Refer to FIG. 2. FIG. 2 is a flowchart of a method for determining SSB search information according to an embodiment of this application. In this embodiment, the method is applied to a terminal. As shown in FIG. 2, the method includes the following steps.

Step 201. Obtain target information, where the target information includes at least one of frequency domain information of SSB and indication signaling.

In this embodiment of this application, the frequency domain information of SSB includes at least one of the following:
a frequency range in which a search frequency of SSB falls; and
a subcarrier spacing (Subcarrier Spacing, SCS) of SSB.

It should be noted that when performing initial cell search or cell reselection, the terminal may first determine the search frequency of SSB, and perform SSB search in a possible frequency offset range based on the search frequency. The possible frequency offset range of the search frequency is a frequency range in which the search frequency of SSB falls. For example, the frequency range in which the search frequency of SSB falls is 52.6 GHz-71 GHz, and the terminal performs the SSB search in this frequency range.

It can be understood that in a communication system, such as a fifth-generation communication system (5G), different SCSs such as 15 kHz, 30 kHz, 120 kHz, and 240 kHz can be used, and using a larger SCS can shorten the symbol length and reduce the delay. When the terminal performs the SSB search, different SCSs may affect the quantity of branches branch that need to be buffered during the SSB search. In this embodiment of this application, when performing the SSB search, the terminal may determine the related information of SSB search according to the SCS of SSB.

Optionally, the terminal may also determine the related information of SSB search based on the obtained indication signaling. The indication signaling may be signaling delivered by a network-side device to the terminal, and the indication signaling is explicit indication signaling. The indication signaling indicates the related information of SSB search usable by the terminal. For example, the indication signaling may indicate whether SSB periodicities configurable by the terminal are {1.25 ms, 2.5 ms, 5 ms, 10 ms, 20 ms, 40 ms} or {5 ms, 10 ms, 20 ms, 40 ms, 80 ms, 160 ms}.

Step 202. Determine related information of SSB search based on the target information.

In this embodiment of this application, the related information of SSB search may include at least one of the following:
parameter information of SSB;
parameter information of synchronization signal and PBCH block measurement timing configuration SMTC; and
a parameter for the terminal to perform cell reselection.

The parameter information of SSB may be parameters including SSB periodicity, the number of candidate SSBs, a primary synchronization signal (Primary Synchronization Signal, PSS) sequence, a secondary synchronization signal (Secondary Synchronization Signal, SSS) sequence, and the like. In this embodiment of this application, the parameter information of SSB includes at least one of the following:
an SSB periodicity assumed when the terminal performs initial cell selection; and
configured parameter information of SSB.

It should be noted that the terminal may determine an SSB periodicity assumed when performing the initial cell search, for example, the assumed SSB periodicity may be 5 ms, 10 ms, or the like. It should be noted that the assumed SSB periodicity may be a used SSB periodicity or an adopted SSB periodicity, that is, the parameter information of SSB may include the SSB periodicity used by the terminal when performing initial cell selection. In addition, the configured parameter information of SSB may be configured to the terminal by a network-side device. For example, the configured parameter information of SSB may include an SSB periodicity, and then the terminal performs the SSB search based on the SSB periodicity configured. Optionally, the configured parameter information of SSB may also include other parameters, such as an SSS sequence and a PSS sequence.

In this embodiment of this application, the parameter information of synchronization signal and PBCH block measurement timing configuration (SS/PBCH block Measurement Timing Configuration, SMTC) may include parameters such as an SMTC periodicity, an SMTC length, and an offset. Optionally, the parameter information of SMTC includes at least one of the following:
an SMTC value assumed when the terminal performs SSB measurement; and
configured parameter information of SMTC.

For example, the terminal may assume an SMTC value when performing SSB measurement. The assumed SMTC value, for example, may be 1 ms, 5 ms, or the like. The terminal may perform the SSB search based on the assumed SMTC value. Alternatively, the terminal may perform the SSB search based on the SMTC parameters configured. For example, the SMTC parameters may be configured to the terminal by a network-side device. Optionally, configured parameter information of SMTC may include at least one of an SMTC periodicity and an SMTC length. For example, the SMTC periodicity configured may be 2.5 ms, 5 ms, or the like, and the SMTC length configured may be 0.5 ms, 1 ms, or the like.

The parameter for the terminal to perform cell reselection may be a scaling value of a parameter required for cell reselection, or indicate whether the terminal performs scaling during cell reselection.

In the solution provided in this embodiment of this application, the terminal obtains at least one of frequency domain information of SSB and indication signaling, and then determines the related information of SSB search, for example, determines parameter information of SSB and parameter information of SMTC. In this way, the terminal reduces the complexity of the SSB search, improving the speed of the SSB search performed by the terminal and reducing the search time spent by the terminal.

Optionally, in this embodiment of this application, in a case that the target information is in a first state, the related information of SSB search includes at least one of the following:
parameter information of SSB being first SSB parameter information;
parameter information of SMTC being first SMTC parameter information; and
a parameter for the terminal to perform cell reselection being a first parameter, where
that the target information is in the first state means that the target information satisfies at least one of the following:
   the search frequency of SSB being in a preset frequency range;
   the SCS of SSB being a first preset frequency value; and
   the indication signaling indicating that the search frequency of SSB is in a preset frequency range and that the SCS of SSB is a second preset frequency value.

In other words, when the target information satisfies one of the following conditions: the search frequency of SSB is in a preset frequency range, the SCS of SSB is a first preset frequency value, and the indication signaling indicates the related information of SSB search used by the terminal, the terminal can determine, based on the target information, that the related information of SSB search at least includes: the parameter information of SSB being the first SSB parameter information, the parameter information of SMTC being the first SMTC parameter information, and the parameter for the terminal to perform cell reselection being the first parameter.

It can be understood that the first SSB parameter information includes at least one of the following: an SSB periodicity assumed when the terminal performs initial cell selection being a first periodicity; and configured parameter information of SSB being first SSB configuration parameter information. For example, when the terminal performs initial cell selection, the first periodicity used is 5 ms, and the first SSB configuration parameter information is that SSB periodicities configured are {1.25 ms, 2.5 ms, 5 ms, 10 ms, 20 ms, 40 ms}.

The first SMTC parameter information includes at least one of the following: configured parameter information of SMTC being first SMTC configuration parameter information; and an SMTC value assumed when the terminal performs SSB measurement being a first numerical value. For example, the first SMTC configuration parameter information is that SMTC periodicities are {1.25 ms, 2.5 ms, 5 ms, 10 ms, 20 ms} or that SMTC lengths are {0.25 ms, 0.5 ms, 1 ms, 2 ms, 4 ms}; and the first numerical value is 1 ms.

That is, the terminal can determine, based on at least one of the target information, that the related information of SSB search at least includes:
an SSB periodicity assumed when the terminal performs initial cell selection being a first periodicity;
configured parameter information of SSB being first SSB configuration parameter information;
configured parameter information of SMTC being first SMTC configuration parameter information;
an SMTC value assumed when the terminal performs SSB measurement being a first numerical value; and
a parameter for the terminal to perform cell reselection being a first parameter.

To better describe the solution provided in this embodiment of this application, the following will be described through specific implementations.

For example, in a first optional implementation, if the target information obtained by the terminal is that the search frequency of SSB is in the range of 52.6 GHz-71 GHz, the terminal may determine, based on the target information, that the SSB periodicity assumed when the terminal performs the initial cell selection is 5 ms.

In a second optional implementation, if the target information obtained by the terminal is that the search frequency of SSB is in the range of 52.6 GHz-71 GHz, the terminal may determine, based on the target information, that the SSB periodicity assumed when the terminal performs the initial cell selection is 5 ms, that the SMTC value assumed when the terminal performs SSB measurement is 1 ms, and that the parameter for the terminal to perform cell reselection is scaling required.

In a third optional implementation, if the target information obtained by the terminal is that the SCS of SSB is 960 kHz, the terminal may determine, based on the target information, that the SSB periodicity assumed when the terminal performs the initial cell selection is 5 ms.

In a fourth optional implementation, the target information obtained by the terminal is indication signaling, and the indication signaling may indicate the specific related information of SSB search used by the terminal. For example, the terminal may determine, based on the indication signaling, that SSB periodicities configurable by the terminal are {1.25 ms, 2.5 ms, 5 ms, 10 ms, 20 ms, 40 ms} and that configurable SMTC periodicities are {1.25 ms, 2.5 ms, 5 ms, 10 ms, 20 ms}.

It can be understood that when the target information is in the first state, the related information of SSB search determined by the terminal may alternatively be other information. Details are not enumerated in this embodiment.

Optionally, in a case that the target information is in a second state, the related information of SSB search includes at least one of the following:
parameter information of SSB being second SSB parameter information;
parameter information of SMTC being second SMTC parameter information; and
a parameter for the terminal to perform cell reselection being a second parameter, where
the second state is a state different from the first state.

It should be noted that when the target information is in the first state, the target information satisfies one of the following conditions: the search frequency of SSB being in a preset frequency range; the SCS of SSB being a first preset frequency value; and the indication signaling indicating that the search frequency of SSB is in a preset frequency range and that the SCS of SSB is a second preset frequency value. When the target information is in the second state, it may mean that the target information is correspondingly different from the target information in the first state.

For example, if the target information being in the first state means that the search frequency of SSB is in the preset frequency range, the target information being in the second state means that the search frequency of SSB is not in the preset range.

If the target information being in the first state means that the SCS of SSB is the first preset frequency value, the target information being in the second state means that the SCS of SSB is not the first preset frequency value.

If the target information being in the first state means that the search frequency of SSB is in the preset frequency range and that the SCS of SSB is the first preset frequency value, the target information being in the second state means that the search frequency of SSB is not in the preset range and that the SCS of SSB is not the first preset frequency value.

It can be understood that the first state of the target information may alternatively be another form, and the second state of the target information is correspondingly a form different from the first state. Details are not enumerated in this embodiment.

In this embodiment, the second SSB parameter information includes at least one of the following: an SSB periodicity assumed when the terminal performs initial cell selection is a second periodicity; and configured parameter information of SSB being second SSB configuration parameter information. For example, the second periodicity is 20 ms, which means that when the target information is in the second state, the SSB periodicity assumed when the terminal performs initial cell selection is 20 ms; and the second SSB configuration parameter information is that SSB periodicities configured are {5 ms, 10 ms, 20 ms, 40 ms, 80 ms, 160 ms}.

The second SMTC parameter information includes at least one of the following: configured parameter information of SMTC being second SMTC configuration parameter information; and an SMTC value assumed when the terminal performs SSB measurement being a second numerical value. For example, the second SMTC configuration parameter information is that SMTC periodicities are {5 ms, 10 ms, 20 ms, 40 ms, 80 ms, 160 ms} or that SMTC lengths are {1 ms, 2 ms, 3 ms, 4 ms, 5 ms}; and the first numerical value is 5 ms.

In other words, when the target information is in the second state, the terminal can determine, based on at least one of the target information, that the related information of SSB search at least includes:
an SSB periodicity assumed when the terminal performs initial cell selection being a second periodicity;
configured parameter information of SSB being second SSB configuration parameter information;
configured parameter information of SMTC being second SMTC configuration parameter information;
an SMTC value assumed when the terminal performs SSB measurement being a second numerical value; and
a parameter for the terminal to perform cell reselection being a second parameter.

To better describe the solution provided in this embodiment, the following will describe a case in which the target information is in the second state through specific implementations.

For example, in a first optional implementation, if the target information obtained by the terminal is that the search frequency of SSB is not in the range of 52.6 GHz-71 GHz, the terminal may determine, based on the target information, that the SSB periodicity assumed when the terminal performs the initial cell selection is 20 ms.

In a second optional implementation, if the target information obtained by the terminal is that the search frequency of SSB is not in the range of 52.6 GHz-71 GHz, the terminal may determine, based on the target information, that the SSB periodicity assumed when the terminal performs the initial cell selection is 20 ms, that the SMTC value assumed when the terminal performs SSB measurement is 5 ms, and that the parameter for the terminal to perform cell reselection requires no scaling.

In a third optional implementation, if the target information obtained by the terminal is that the SCS of SSB is 120 kHz, the terminal may determine, based on the target information, that the SSB periodicity assumed when the terminal performs the initial cell selection is 20 ms.

In a fourth optional implementation, the target information obtained by the terminal is indication signaling, and the indication signaling may be related information for the terminal to perform SSB search. For example, the terminal may determine, based on the indication signaling, that SSB periodicities configurable by the terminal are {5 ms, 10 ms, 20 ms, 40 ms, 80 ms, 160 ms}, that configurable SMTC periodicities are {5 ms, 10 ms, 20 ms, 40 ms, 80 ms, 160 ms}, or that SMTC lengths are {1 ms, 2 ms, 3 ms, 4 ms, 5 ms}.

It can be understood that when the target information is in the second state, the related information of SSB search determined by the terminal may alternatively be other implementations. Details are not enumerated in this embodiment.

In this embodiment of this application, the indication signaling includes at least one of the following:
parameter information of SSB;
parameter information of synchronization signal and PBCH block measurement timing configuration SMTC parameter information; and
a parameter for the terminal to perform cell reselection.

The parameter information of SSB includes at least one of the following: an SSB periodicity assumed when the terminal performs initial cell selection; and configured parameter information of SSB.

The parameter information of SMTC includes at least one of the following: an SMTC value assumed when the terminal performs SSB measurement; and configured parameter information of SMTC.

In other words, the indication signaling may include at least one of an SSB periodicity assumed when the terminal performs initial cell selection, configured parameter information of SSB, an SMTC value assumed when the terminal performs SSB measurement, configured parameter information of SMTC, and a parameter for the terminal to perform cell reselection. The indication signaling may be configured to the terminal by a network-side device, and then the terminal can directly determine the related information of SSB search based on the indication signaling, which reduces the complexity of SSB search performed by the terminal, thereby increasing the speed of the SSB search performed by the terminal and reducing the time spent by the terminal in the SSB search.

Optionally, in a case that the frequency domain information of SSB includes at least one of a frequency range in which a search frequency of SSB falls and an SCS of SSB, the related information of SSB search includes: a first quantity corresponding to branches for performing the SSB search and a second quantity of SSB periodicities corresponding to the SSB search, and the method further includes:
performing SSB search in the second quantity of SSB periodicities based on the first quantity of branches.

That is, for SSB search at a particular frequency, the terminal may complete an SSB search by using a first quantity of branches in a second quantity of SSB periodicities. For example, the first quantity is N, the second quantity is M, and in M different SSB periodicities, the terminal may perform SSB search in a possible frequency offset range at a center frequency corresponding to N branches. In this way, the SSB periodicity assumed when the terminal performs initial cell search can be shortened, and the terminal can also introduce a new scaling parameter, such as a new scaling value, when performing cell reselection.

Optionally, in a case that the frequency domain information of SSB includes at least one of a frequency range in which a search frequency of SSB falls and an SCS of SSB, or that the related information of SSB search includes an SSB periodicity, the method further includes:
determining a frame number and/or slot number corresponding to a physical downlink control channel Type 0 PDCCH for scheduling system information.

It should be noted that the periodicity of a physical downlink control channel (Type 0 Physical Downlink Control Channel, Type 0 PDCCH) for scheduling system information may be the same as the SSB periodicity. For example, in the initial stage, the SSB periodicity assumed when the terminal performs initial cell selection is 20 ms, and in this case, a periodicity in which the terminal receives system information block 1 (System Information Block 1, SIB 1) information of the Type 0 PDCCH is 20 ms. After the terminal obtains an SSB periodicity configuration, a periodicity in which the terminal monitors the Type 0 PDCCH is the SSB periodicity configured. In this embodiment of this application, the terminal can determine a frame number and/or slot number corresponding to a Type 0 PDCCH based on at least one of a frequency range in which a search frequency of SSB falls and an SCS of SSB, or based on an SSB periodicity.

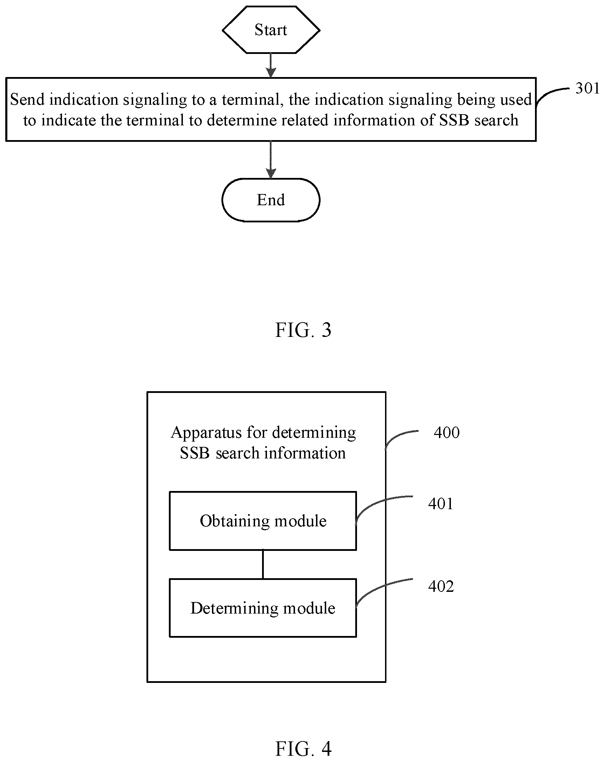

Refer to FIG. 3. FIG. 3 is a flowchart of another method for determining SSB search information according to an embodiment of this application. The method provided in this embodiment is applied to a network-side device. As shown in FIG. 3, the method includes the following steps.

Step 301. Send indication signaling to a terminal, the indication signaling being used to indicate the terminal to determine related information of SSB search.

Optionally, the indication signaling includes at least one of the following:
parameter information of SSB;
parameter information of synchronization signal and PBCH block measurement timing configuration SMTC; and
a parameter for the terminal to perform cell reselection.

Optionally, the parameter information of SSB includes at least one of the following:
an SSB periodicity assumed when the terminal performs initial cell selection; and
configured parameter information of SSB.

Optionally, the parameter information of SMTC includes at least one of the following:
an SMTC value assumed when the terminal performs SSB measurement; and
configured parameter information of SMTC.

Optionally, the related information of SSB search includes at least one of the following:
parameter information of SSB;
parameter information of synchronization signal and PBCH block measurement timing configuration SMTC parameter information; and
a parameter for the terminal to perform cell reselection.

Optionally, the parameter information of SSB includes at least one of the following:
an SSB periodicity assumed when the terminal performs initial cell selection; and
configured parameter information of SSB.

Optionally, the parameter information of SMTC includes at least one of the following:
an SMTC value assumed when the terminal performs SSB measurement; and
configured parameter information of SMTC.

Optionally, in a case that the indication signaling indicates that the search frequency of SSB is in a preset frequency range and that the SCS of SSB is a second preset frequency value, the related information of SSB search includes at least one of the following:
parameter information of SSB being first SSB parameter information;
parameter information of SMTC being first SMTC parameter information; and
a parameter for the terminal to perform cell reselection being a first parameter.

Optionally, the first SSB parameter information includes at least one of the following:
an SSB periodicity assumed when the terminal performs initial cell selection being a first periodicity; and
configured parameter information of SSB being first SSB configuration parameter information.

Optionally, the first SMTC parameter information includes at least one of the following:
configured parameter information of SMTC being first SMTC configuration parameter information; and
an SMTC value assumed when the terminal performs SSB measurement being a first numerical value.

Optionally, in a case that the indication signaling indicates that the search frequency of SSB is not in a preset frequency range and/or that the SCS of SSB is not a second preset frequency value, the related information of SSB search includes at least one of the following:
parameter information of SSB being second SSB parameter information;
parameter information of SMTC being second SMTC parameter information; and
a parameter for the terminal to perform cell reselection being a second parameter, where
the second state is a state different from the first state.

Optionally, the second SSB parameter information includes at least one of the following:
an SSB periodicity assumed when the terminal performs initial cell selection being a second periodicity; and
configured parameter information of SSB being second SSB configuration parameter information.

Optionally, the second SMTC parameter information includes at least one of the following:
configured parameter information of SMTC being second SMTC configuration parameter information; and
an SMTC value assumed when the terminal performs SSB measurement being a second numerical value.

It should be noted that for specific implementations of technical features such as indication signaling and related information of SSB search provided in this embodiment of this application, reference may be made to the description in the embodiment of FIG. 2. Details are not repeated in this embodiment.

In this embodiment of this application, a network-side device sends indication signaling to a terminal, the indication signaling being used to indicate the terminal to determine related information of SSB search. In this way, the terminal reduces the complexity of the SSB search, which thereby can increase the speed of the SSB search performed by the terminal and reduce the search time spent by the terminal.

It should be noted that the method for determining SSB search information provided in this embodiment of this application may be performed by an apparatus for determining SSB search information or a control module for performing the method for determining SSB search information in the apparatus for determining SSB search information. In this embodiment of this application, the apparatus for determining SSB search information provided in the embodiments of this application is described by using an example in which the apparatus for determining SSB search information performs the method for determining SSB search information.

Refer to FIG. 4. FIG. 4 is an apparatus for determining SSB search information according to an embodiment of this application, and the apparatus for determining SSB search information is applied to a terminal. As shown in FIG. 4, the apparatus 400 for determining SSB search information includes:
an obtaining module 401, configured to obtain target information, where the target information includes at least one of frequency domain information of SSB and indication signaling; and
a determining module 402, configured to determine related information of SSB search based on the target information.

Optionally, the frequency domain information of SSB includes at least one of the following:
a frequency range in which a search frequency of SSB falls; and
a subcarrier spacing SCS of SSB .

Optionally, the related information of SSB search includes at least one of the following:
parameter information of SSB;
parameter information of synchronization signal and PBCH block measurement timing configuration SMTC; and
a parameter for the terminal to perform cell reselection.

Optionally, the parameter information of SSB includes at least one of the following:
an SSB periodicity assumed when the terminal performs initial cell selection; and
configured parameter information of SSB.

Optionally, the parameter information of SMTC includes at least one of the following:
an SMTC value assumed when the terminal performs SSB measurement; and
configured parameter information of SMTC.

Optionally, configured parameter information of SMTC includes at least one of an SMTC periodicity and an SMTC length.

Optionally, in a case that the target information is in a first state, the related information of SSB search includes at least one of the following:
parameter information of SSB being first SSB parameter information;
parameter information of SMTC being first SMTC parameter information; and
a parameter for the terminal to perform cell reselection is a first parameter, where
that the target information is in the first state means that the target information satisfies at least one of the following:
   the search frequency of SSB being in a preset frequency range;
   the SCS of SSB being a first preset frequency value; and
   the indication signaling indicating that the search frequency of SSB is in a preset frequency range and that the SCS of SSB is a second preset frequency value.

Optionally, the first SSB parameter information includes at least one of the following:
an SSB periodicity assumed when the terminal performs initial cell selection being a first periodicity; and
configured parameter information of SSB being first SSB configuration parameter information.

Optionally, the first SMTC parameter information includes at least one of the following:
configured parameter information of SMTC being first SMTC configuration parameter information; and
an SMTC value assumed when the terminal performs SSB measurement being a first numerical value.

Optionally, in a case that the target information is in a second state, the related information of SSB search includes at least one of the following:
parameter information of SSB being second SSB parameter information;
parameter information of SMTC being second SMTC parameter information; and
a parameter for the terminal to perform cell reselection being a second parameter, where
the second state is a state different from the first state.

Optionally, the second SSB parameter information includes at least one of the following:
an SSB periodicity assumed when the terminal performs initial cell selection being a second periodicity; and
configured parameter information of SSB being second SSB configuration parameter information.

Optionally, the second SMTC parameter information includes at least one of the following:
configured parameter information of SMTC being second SMTC configuration parameter information; and
an SMTC value assumed when the terminal performs SSB measurement being a second numerical value.

Optionally, the indication signaling includes at least one of the following:
parameter information of SSB;
parameter information of SMTC; and
a parameter for the terminal to perform cell reselection.

Optionally, the parameter information of SSB includes at least one of the following:
an SSB periodicity assumed when the terminal performs initial cell selection; and
configured parameter information of SSB.

Optionally, the parameter information of SMTC includes at least one of the following:
an SMTC value assumed when the terminal performs SSB measurement; and
configured parameter information of SMTC.

Optionally, in a case that the frequency domain information of SSB includes at least one of a frequency range in which a search frequency of SSB falls and an SCS of SSB, the related information of SSB search includes: a first quantity corresponding to branches for performing the SSB search and a second quantity of SSB periodicities corresponding to the SSB search; and the apparatus further includes:
a search module, configured to perform SSB search in the second quantity of SSB periodicities based on the first quantity of branches.

Optionally, in a case that the frequency domain information of SSB includes at least one of a frequency range in which a search frequency of SSB falls and an SCS of SSB, or that the related information of SSB search includes an SSB periodicity, the determining module 402 is further configured to:
determine a frame number and/or slot number corresponding to a physical downlink control channel Type 0 PDCCH for scheduling system information.

In this embodiment of this application, the apparatus 400 for determining SSB search information obtains at least one of frequency domain information of SSB and indication signaling, and then determines the related information of SSB search. In this way, the terminal reduces the complexity of the SSB search, which thereby can improve the speed of the SSB search performed by the terminal and reduce the search time spent by the terminal.

The apparatus for determining SSB search information in this embodiment of this application may be an apparatus, or may be a component, an integrated circuit, or a chip in the terminal. The apparatus may be a mobile terminal or a non-mobile terminal. For example, the mobile electronic device may include but is not limited to the foregoing illustrated types of terminals 11. The non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The apparatus for determining SSB search information in this embodiment of this application may be an apparatus with an operating system. The operating system may be an Android (Android) operating system, may be an iOS operating system, or may be another possible operating system. This is not specifically limited in this embodiment of this application.

The apparatus for determining SSB search information provided in this embodiment of this application can implement the processes implemented in the embodiment of the method for determining SSB search information in FIG. 2, with the same technical effects achieved. To avoid repetition, details are not described herein again.

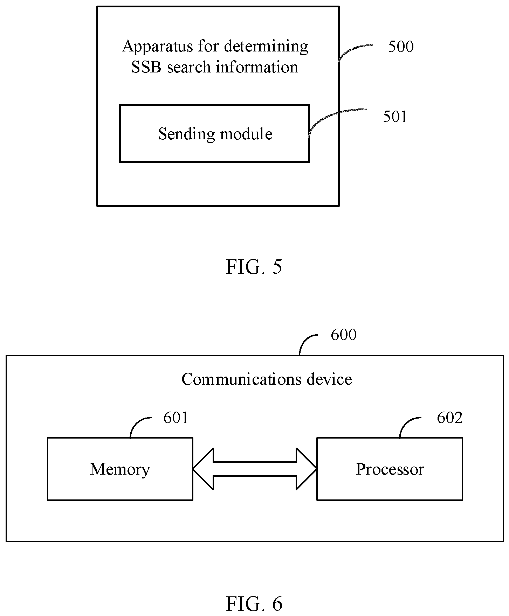

Refer to FIG. 5. FIG. 5 is an apparatus for determining SSB search information according to an embodiment of this application, and the apparatus for determining SSB search information is applied to a network-side device. As shown in FIG. 5, the apparatus 500 for determining SSB search information includes:
a sending module 501, configured to send indication signaling to a terminal, the indication signaling being used to indicate the terminal to determine related information of SSB search.

Optionally, the indication signaling includes at least one of the following:
parameter information of SSB;
parameter information of synchronization signal and PBCH block measurement timing configuration SMTC; and
a parameter for the terminal to perform cell reselection.

Optionally, the parameter information of SSB includes at least one of the following:
an SSB periodicity assumed when the terminal performs initial cell selection; and
configured parameter information of SSB.

Optionally, the parameter information of SMTC includes at least one of the following:
an SMTC value assumed when the terminal performs SSB measurement; and
configured parameter information of SMTC.

Optionally, the related information of SSB search includes at least one of the following:
parameter information of SSB;
parameter information of synchronization signal and PBCH block measurement timing configuration SMTC; and
a parameter for the terminal to perform cell reselection.

Optionally, the parameter information of SSB includes at least one of the following:
an SSB periodicity assumed when the terminal performs initial cell selection; and
configured parameter information of SSB.

Optionally, the parameter information of SMTC includes at least one of the following:
an SMTC value assumed when the terminal performs SSB measurement; and
configured parameter information of SMTC.

Optionally, in a case that the indication signaling indicates that the search frequency of SSB is in a preset frequency range and that the SCS of SSB is a second preset frequency value, the related information of SSB search includes at least one of the following:
parameter information of SSB being first SSB parameter information;
parameter information of SMTC being first SMTC parameter information; and
a parameter for the terminal to perform cell reselection being a first parameter.

Optionally, the first SSB parameter information includes at least one of the following:
an SSB periodicity assumed when the terminal performs initial cell selection being a first periodicity; and
configured parameter information of SSB being first SSB configuration parameter information.

Optionally, the first SMTC parameter information includes at least one of the following:
configured parameter information of SMTC being first SMTC configuration parameter information; and
an SMTC value assumed when the terminal performs SSB measurement being a first numerical value.

Optionally, in a case that the indication signaling indicates that the search frequency of SSB is not in a preset frequency range and/or that the SCS of SSB is not a second preset frequency value, the related information of SSB search includes at least one of the following:
parameter information of SSB being second SSB parameter information;
parameter information of SMTC being second SMTC parameter information; and
a parameter for the terminal to perform cell reselection being a second parameter, where
the second state is a state different from the first state.

Optionally, the second SSB parameter information includes at least one of the following:
an SSB periodicity assumed when the terminal performs initial cell selection being a second periodicity; and
configured parameter information of SSB being second SSB configuration parameter information.

Optionally, the second SMTC parameter information includes at least one of the following:
configured parameter information of SMTC being second SMTC configuration parameter information; and
an SMTC value assumed when the terminal performs SSB measurement being a second numerical value.

In this embodiment of this application, the apparatus 500 for determining SSB search information sends indication signaling to a terminal, the indication signaling being used to indicate the terminal to determine related information of SSB search. In this way, the terminal reduces the complexity of the SSB search, which thereby improves the speed of the SSB search performed by the terminal and reduces the search time spent by the terminal.

The apparatus for determining SSB search information provided in this embodiment of this application can implement the processes implemented in the embodiment of the method for determining SSB search information in FIG. 3, with the same technical effects achieved. To avoid repetition, details are not described herein again.

Optionally, as shown in FIG. 6, an embodiment of this application further provides a communications device 600, including a processor 601, a memory 602, and a program or instructions stored in the memory 602 and executable on the processor 601. For example, if the communications device 600 is a terminal, when the program or instructions are executed by the processor 601, the processes of the foregoing embodiment of the method for determining SSB search information in FIG. 2 are implemented, with the same technical effects achieved. If the communications device 600 is a network-side device, when the computer program is executed by the processor 601, the processes of the embodiment of the method for determining SSB search information in FIG. 3 are implemented, with the same technical effects achieved. To avoid repetition, details are not described herein again.

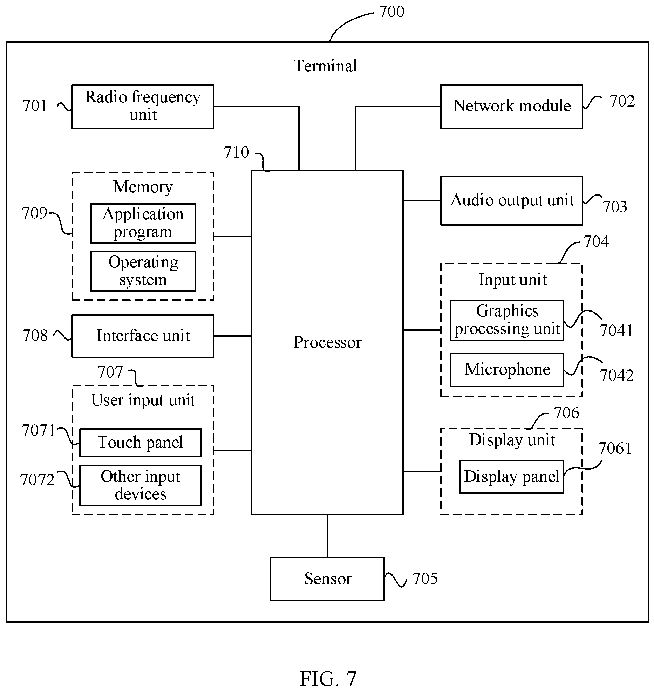

FIG. 7 is a schematic diagram of a hardware structure of a terminal for implementing the embodiments of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

Those skilled in the art can understand that the terminal 700 may further include a power supply (for example, a battery) that supplies power to various components. The power supply may be logically connected to the processor 710 through a power management system, so that functions such as charge and discharge management and power consumption management are implemented by using the power management system. The terminal is not limited to the terminal structure shown in FIG. 7. The terminal may include more or fewer components than shown in the figure, or combine some of the components, or arrange the components differently. Details are not described herein.

It should be understood that in this embodiment of this application, the input unit 704 may include a graphics processing unit (graphics processing unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include the display panel 7061. The display panel 7061 may be configured in a form of a liquid crystal display, an organic light-emitting diode, or the like. The user input unit 707 includes a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (for example, a volume control button or a power button), a trackball, a mouse, and a joystick. Details are not described herein.

In this embodiment of this application, the radio frequency unit 701 sends downlink information received from a network-side device to the processor 710 for processing, and in addition, sends uplink data to the network-side device. Generally, the radio frequency unit 701 includes but is not limited to an antenna, at least one amplifier, a transceiver, a coupler, a low noise amplifier, and a duplexer.

The memory 709 may be configured to store software programs or instructions and various data. The memory 709 may mainly include a program or instructions storage area and a data storage area. The program or instructions storage area may store an operating system, an application program or instructions required by at least one function (for example, an audio play function or an image play function), and the like. In addition, the memory 709 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, For example, at least one disk storage device, a flash memory device, or other non-volatile solid-state storage devices.

The processor 710 may include one or more processing units. Optionally, the processor 710 may integrate an application processor and a modem processor. The application processor mainly processes an operating system, a user interface, an application program or instructions, and the like. The modem processor mainly processes wireless communication, and for example, may be a baseband processor. It can be understood that the modem processor may alternatively not be integrated in the processor 710.

The processor 710 is configured to obtain target information, where the target information includes at least one of frequency domain information of SSB and indication signaling; and
determine related information of SSB search based on the target information.

Optionally, the frequency domain information of SSB includes at least one of the following:
a frequency range in which a search frequency of SSB falls; and
a subcarrier spacing SCS of SSB .

Optionally, the related information of SSB search includes at least one of the following:
parameter information of SSB;
parameter information of synchronization signal and PBCH block measurement timing configuration SMTC; and
a parameter for the terminal to perform cell reselection.

Optionally, the parameter information of SSB includes at least one of the following:
an SSB periodicity assumed when the terminal performs initial cell selection; and
configured parameter information of SSB.

Optionally, the parameter information of SMTC includes at least one of the following:
an SMTC value assumed when the terminal performs SSB measurement; and
configured parameter information of SMTC.

Optionally, configured parameter information of SMTC includes at least one of an SMTC periodicity and an SMTC length.

Optionally, in a case that the target information is in a first state, the related information of SSB search includes at least one of the following:
parameter information of SSB being first SSB parameter information;
parameter information of SMTC being first SMTC parameter information; and
a parameter for the terminal to perform cell reselection being a first parameter, where
that the target information is in the first state means that the target information satisfies at least one of the following:
   the search frequency of SSB being in a preset frequency range;
   the SCS of SSB being a first preset frequency value; and
   the indication signaling indicating that the search frequency of SSB is in a preset frequency range and that the SCS of SSB is a second preset frequency value.

Optionally, the first SSB parameter information includes at least one of the following:
an SSB periodicity assumed when the terminal performs initial cell selection being a first periodicity; and
configured parameter information of SSB being first SSB configuration parameter information.

Optionally, the first SMTC parameter information includes at least one of the following:
configured parameter information of SMTC being first SMTC configuration parameter information; and
an SMTC value assumed when the terminal performs SSB measurement being a first numerical value.

Optionally, in a case that the target information is in a second state, the related information of SSB search includes at least one of the following:
parameter information of SSB being second SSB parameter information;
parameter information of SMTC being second SMTC parameter information; and
a parameter for the terminal to perform cell reselection being a second parameter, where
the second state is a state different from the first state.

Optionally, the second SSB parameter information includes at least one of the following:
an SSB periodicity assumed when the terminal performs initial cell selection being a second periodicity; and
configured parameter information of SSB being second SSB configuration parameter information.

Optionally, the second SMTC parameter information includes at least one of the following:
configured parameter information of SMTC being second SMTC configuration parameter information; and
an SMTC value assumed when the terminal performs SSB measurement being a second numerical value.

Optionally, the indication signaling includes at least one of the following:
parameter information of SSB;
SMTC parameter information; and
a parameter for the terminal to perform cell reselection.

Optionally, the parameter information of SSB includes at least one of the following:
an SSB periodicity assumed when the terminal performs initial cell selection; and
configured parameter information of SSB.

Optionally, the parameter information of SMTC includes at least one of the following:
an SMTC value assumed when the terminal performs SSB measurement; and
configured parameter information of SMTC.

Optionally, in a case that the frequency domain information of SSB includes at least one of a frequency range in which a search frequency of SSB falls and an SCS of SSB, the related information of SSB search includes: a first quantity corresponding to branches for performing the SSB search and a second quantity of SSB periodicities corresponding to the SSB search; and the processor 710 is further configured to:
perform SSB search in the second quantity of SSB periodicities based on the first quantity of branches.

Optionally, in a case that the frequency domain information of SSB includes at least one of a frequency range in which a search frequency of SSB falls and an SCS of SSB, or that the related information of SSB search includes an SSB periodicity, the processor 710 is further configured to:
determine a frame number and/or slot number corresponding to a physical downlink control channel Type 0 PDCCH for scheduling system information.

In this embodiment of this application, the terminal obtains at least one of frequency domain information of SSB and indication signaling, and then determines the related information of SSB search. In this way, the terminal reduces the complexity of the SSB search, improving the speed of the SSB search performed by the terminal and reducing the search time spent by the terminal.

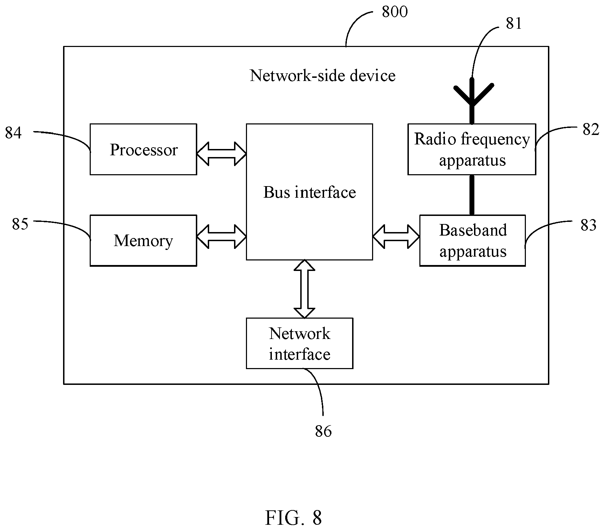

Specifically, an embodiment of this application further provides a network-side device. As shown in FIG. 8, the network-side device 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and transmits the received information to the baseband apparatus 83 for processing. In a downlink direction, the baseband apparatus 83 processes to-be-transmitted information, and transmits the information to the radio frequency apparatus 82; and the radio frequency apparatus 82 processes the received information and then transmits the information by using the antenna 81.

The radio frequency apparatus may be located in the baseband apparatus 83. The method performed by the network-side device in the foregoing embodiment may be implemented in the baseband apparatus 83, and the baseband apparatus 83 includes a processor 84 and a memory 85.

The baseband apparatus 83 may include, for example, at least one baseband processing unit, where a plurality of chips are disposed on the baseband processing unit. As shown in FIG. 8, one of the chips is, for example, the processor 84, and connected to the memory 85, to invoke the program in the memory 85 to perform the operations of the network-side device shown in the foregoing method embodiment.

The baseband apparatus 83 may further include a network interface 86, configured to exchange information with the radio frequency apparatus 82, where the interface is, for example, a common public radio interface (common public radio interface, CPRI for short).

Specifically, the network-side device in this embodiment of the present invention further includes instructions or a program stored in the memory 85 and executable on the processor 84. The processor 84 invokes the instructions or program in the memory 85 to perform the method performed by the modules shown in FIG. 5, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiment of the method for determining SSB search information in FIG. 2 are implemented, or the processes of the foregoing embodiment of the method for determining SSB search information in FIG. 3 are implemented, with the same technical effects achieved. To avoid repetition, details are not described herein again.

The processor is the processor of the terminal in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a program product, where the program product is stored in a non-volatile storage medium, and the program product is configured to be executed by at least one processor to implement the processes of the foregoing embodiment of the method for determining SSB search information in FIG. 2, or to implement the processes of the foregoing embodiment of the method for determining SSB search information in FIG. 3, with the same technical effects achieved. To avoid repetition, details are not described herein again.

The processor is the processor of the terminal in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip, where the chip includes a processor and a communications interface, the communications interface is coupled to the processor, and the processor is configured to run a communications device program or instructions to implement the processes of the foregoing embodiment of the method for determining SSB search information in FIG. 2, or to implement the processes of the foregoing embodiment of the method for determining SSB search information in FIG. 3, with the same technical effects achieved. To avoid repetition, details are not described herein again.

It should be understood that the chip mentioned in this embodiment of this application may also be referred to as a system-on-chip, a system chip, a chip system, or the like.

It may be understood that the embodiments described in this disclosure may be implemented by hardware, software, firmware, middleware, microcode, or a combination thereof. For hardware implementation, a module, a unit, a sub-module, a sub-unit, or the like may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

It should be noted that the terms "comprise", "include", or any of their variants in this specification are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In the absence of more restrictions, an element defined by "including a ..." does not exclude another same element in a process, method, article, or apparatus that includes the element. In addition, it should be noted that the scope of the methods and apparatuses in the embodiments of this application is not limited to performing functions in the order shown or discussed, but may further include performing functions at substantially the same time or in reverse order depending on the involved functions. For example, the described method may be performed in an order different from the described order, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The embodiments of this application are described above with reference to the accompanying drawings, but this application is not limited to the foregoing implementations. The foregoing implementations are only illustrative rather than restrictive. Inspired by this application, persons of ordinary skill in the art can still derive many variations without departing from the essence of this application and the protection scope of the claims. All these variations shall fall within the protection of this application.

## Claims

1. A method for determining synchronization signal and PBCH block SSB search information, applied to a terminal and comprising:
obtaining target information; wherein
the target information comprises at least one of frequency domain information of SSB and indication signaling; and
determining related information of SSB search based on the target information.

2. The method according to claim 1, wherein the frequency domain information of SSB comprises at least one of following:
a frequency range in which a search frequency of SSB falls; and
a subcarrier spacing SCS of SSB.

3. The method according to claim 1, wherein the related information of SSB search comprises at least one of following:
parameter information of SSB;
parameter information of synchronization signal and PBCH block measurement timing configuration SMTC; and
a parameter for the terminal to perform cell reselection.

4. The method according to claim 3, wherein the parameter information of SSB comprises at least one of following:
an SSB periodicity assumed when the terminal performs initial cell selection; and
configured parameter information of SSB.

5. The method according to claim 3, wherein the parameter information of SMTC comprises at least one of following:
an SMTC value assumed when the terminal performs SSB measurement; and
configured parameter information of SMTC.

6. The method according to claim 5, wherein configured parameter information of SMTC comprises at least one of an SMTC periodicity and an SMTC length.

7. The method according to claim 1, wherein in a case that the target information is in a first state, the related information of SSB search comprises at least one of following:
parameter information of SSB being first SSB parameter information;
parameter information of SMTC being first SMTC parameter information; and
a parameter for the terminal to perform cell reselection being a first parameter; wherein
that the target information is in the first state means that the target information satisfies at least one of following:
the search frequency of SSB being in a preset frequency range;
an SCS of the SSB being a first preset frequency value; and
the indication signaling indicating that the search frequency of SSB is in a preset frequency range and that the SCS of SSB is a second preset frequency value.

8. The method according to claim 7, wherein the first SSB parameter information comprises at least one of following:
an SSB periodicity assumed when the terminal performs initial cell selection being a first periodicity; and
configured parameter information of SSB being first SSB configuration parameter information.

9. The method according to claim 7, wherein the first SMTC parameter information comprises at least one of following:
configured parameter information of SMTC being first SMTC configuration parameter information; and
an SMTC value assumed when the terminal performs SSB measurement being a first numerical value.

10. The method according to claim 7, wherein in a case that the target information is in a second state, the related information of SSB search comprises at least one of following:
parameter information of SSB being second SSB parameter information;
parameter information of SMTC being second SMTC parameter information; and
a parameter for the terminal to perform cell reselection being a second parameter; wherein
the second state is a state different from the first state.

11. The method according to claim 10, wherein the second SSB parameter information comprises at least one of following:
an SSB periodicity assumed when the terminal performs initial cell selection being a second periodicity; and
configured parameter information of SSB being second SSB configuration parameter information.

12. The method according to claim 10, wherein the second SMTC parameter information comprises at least one of following:
configured parameter information of SMTC being second SMTC configuration parameter information; and
an SMTC value assumed when the terminal performs SSB measurement being a second numerical value.

13. The method according to claim 1, wherein the indication signaling comprises at least one of following:
parameter information of SSB;
parameter information of SMTC; and
a parameter for the terminal to perform cell reselection.

14. The method according to claim 13, wherein the parameter information of SSB comprises at least one of following:
an SSB periodicity assumed when the terminal performs initial cell selection; and
configured parameter information of SSB.

15. The method according to claim 13, wherein the parameter information of SMTC comprises at least one of following:
an SMTC value assumed when the terminal performs SSB measurement; and
configured parameter information of SMTC.

16. The method according to claim 1, wherein in a case that the frequency domain information of SSB comprises at least one of a frequency range in which a search frequency of SSB falls and an SCS of SSB, the related information of SSB search comprises: a first quantity corresponding to branches for performing the SSB search and a second quantity of SSB periodicities corresponding to the SSB search; and the method further comprises:
performing SSB search in the second quantity of SSB periodicities based on the first quantity of branches.

17. The method according to claim 1, wherein in a case that the frequency domain information of SSB comprises at least one of a frequency range in which a search frequency of SSB falls and an SCS of SSB, or that the related information of SSB search comprises an SSB periodicity, the method further comprises:
determining a frame number and/or slot number corresponding to a physical downlink control channel Type 0 PDCCH for scheduling system information.

18. A method for determining synchronization signal and PBCH block SSB search information, applied to a network-side device and comprising:
sending indication signaling to a terminal, the indication signaling being used to indicate the terminal to determine related information of SSB search.

19. The method according to claim 18, wherein the indication signaling comprises at least one of following:
parameter information of SSB;
parameter information of synchronization signal and PBCH block measurement timing configuration SMTC; and
a parameter for the terminal to perform cell reselection.

20. The method according to claim 19, wherein the parameter information of SSB comprises at least one of following:
an SSB periodicity assumed when the terminal performs initial cell selection; and
configured parameter information of SSB.

21. The method according to claim 19, wherein the parameter information of SMTC comprises at least one of following:
an SMTC value assumed when the terminal performs SSB measurement; and
configured parameter information of SMTC.

22. The method according to claim 18, wherein the related information of SSB search comprises at least one of following:
parameter information of SSB;
parameter information of synchronization signal and PBCH block measurement timing configuration SMTC; and
a parameter for the terminal to perform cell reselection.

23. The method according to claim 22, wherein the parameter information of SSB comprises at least one of following:
an SSB periodicity assumed when the terminal performs initial cell selection; and
configured parameter information of SSB.

24. The method according to claim 22, wherein the parameter information of SMTC comprises at least one of following:
an SMTC value assumed when the terminal performs SSB measurement; and
configured parameter information of SMTC.

25. The method according to claim 18, wherein in a case that the indication signaling indicates that the search frequency of SSB is in a preset frequency range and that the SCS of SSB is a second preset frequency value, the related information of SSB search comprises at least one of following:
parameter information of SSB being first SSB parameter information;
parameter information of SMTC being first SMTC parameter information; and
a parameter for the terminal to perform cell reselection being a first parameter.

26. The method according to claim 25, wherein the first SSB parameter information comprises at least one of following:
an SSB periodicity assumed when the terminal performs initial cell selection being a first periodicity; and
configured parameter information of SSB being first SSB configuration parameter information.

27. The method according to claim 25, wherein the first SMTC parameter information comprises at least one of following:
configured parameter information of SMTC being first SMTC configuration parameter information; and
an SMTC value assumed when the terminal performs SSB measurement being a first numerical value.

28. The method according to claim 18, wherein in a case that the indication signaling indicates that the search frequency of SSB is not in a preset frequency range and/or an SCS of SSB is not a second preset frequency value, the related information of SSB search comprises at least one of following:
parameter information of SSB being second SSB parameter information;
parameter information of SMTC being second SMTC parameter information; and
a parameter for the terminal to perform cell reselection being a second parameter; wherein
the second state is a state different from the first state.

29. The method according to claim 28, wherein the second SSB parameter information comprises at least one of following:
an SSB periodicity assumed when the terminal performs initial cell selection being a second periodicity; and
configured parameter information of SSB being second SSB configuration parameter information.

30. The method according to claim 28, wherein the second SMTC parameter information comprises at least one of following:
configured parameter information of SMTC being second SMTC configuration parameter information; and
an SMTC value assumed when the terminal performs SSB measurement being a second numerical value.

31. An apparatus for determining synchronization signal and PBCH block SSB search information, applied to a terminal and comprising:
an obtaining module, configured to obtain target information; wherein
the target information comprises at least one of frequency domain information of SSB and indication signaling; and
a determining module, configured to determine related information of SSB search based on the target information.

32. An apparatus for determining synchronization signal and PBCH block SSB search information, applied to a network-side device and comprising:
a sending module, configured to send indication signaling to a terminal, the indication signaling being used to indicate the terminal to determine related information of SSB search.

33. A communications device, comprising a processor, a memory, and a program or instructions stored in the memory and executable on the processor, wherein when the program or instructions are executed by the processor, steps of the method for determining SSB search information according to any one of claims 1 to 17 are implemented, or when the program or instructions are executed by the processor, steps of the method for determining SSB search information according to any one of claims 18 to 30 are implemented.

34. A readable storage medium, wherein the readable storage medium stores a program or instructions, and when the program or instructions are executed by a processor, steps of the method for determining SSB search information according to any one of claims 1 to 17 are implemented, or when the program or instructions are executed by a processor, steps of the method for determining SSB search information according to any one of claims 18 to 30 are implemented.

35. A chip, comprising a processor and a communications interface, wherein the communications interface is coupled to the processor, and the processor is configured to execute a communications device program or instructions, to implement the method for determining SSB search information according to any one of claims 1 to 17, or the method for determining SSB search information according to any one of claims 18 to 30.
